# EUROPÄISCHE PATENTSCHRIFT

(11) **EP 2 988 069 B1**
(45) Veröffentlichungstag und Bekanntmachung des Hinweises auf die Patenterteilung: **28.02.2018**
(21) Anmeldenummer: 15170997.9
(22) Anmeldetag: 08.06.2015
(51) Int. Cl.: F24D 3/10, E03B 7/07

(54) **ARMATURENANORDNUNG ZUR WASSERBEHANDLUNG VON WASSER FÜR HEIZKREISLÄUFE**
FITTING ASSEMBLY FOR TREATING WATER FOR HEATING CIRCUITS
SYSTÈME DE ROBINETTERIE DESTINÉ AU TRAITEMENT DE L'EAU POUR DES CIRCUITS DE CHAUFFE

(30) Priorität: 21.08.2014 DE 202014103898 U
(43) Veröffentlichungstag der Anmeldung: 24.02.2016
(73) Patentinhaber: Hans Sasserath GmbH & Co. KG., 41352 Korschenbroich (DE)
(72) Erfinder: Hecking, Willi, 41372 Niederkrüchten-Elmpt (DE)
(74) Vertreter: Weisse, Renate

(56) Entgegenhaltungen:
- EP-A2- 1 855 061
- DE-A1-102012 106 957
- DE-U1-202006 017 758
- DE-U1-202010 008 759

## Beschreibung

### Technisches Gebiet

Die Erfindung betrifft eine Armaturenanordnung zur Wasserbehandlung von Wasser für Heizkreisläufe, enthaltend
(a) ein in eine zu dem Heizkreislauf führende Rohrleitung einbaubares, strömungsführendes, gemeinsames Armaturengehäuse mit einem Einlass und einem Auslass;
(b) jeweils einen, an dem Armaturengehäuse vorgesehenen, einlassseitigen und einen auslassseitigen Absperrhahn;
(c) eine im Strömungsweg zwischen dem einlassseitigen und dem auslassseitigen Absperrhahn angeordnete Wasserbehandlungseinrichtung;
(d) eine Systemtrenneranordnung mit einem stromaufwärtigen und einem stromabwärtigen Rückflussverhinderer und einer Ablaufanordnung, die innerhalb des Armaturengehäuses im Strömungsweg hinter dem einlassseitigen Absperrhahn und vor der Wasserbehandlungseinrichtung angeordnet ist; und
(e) einen Druckminderer.

Eine Systemtrenneranordnung stellt sicher, dass kein Wasser aus dem Heizkreislauf zurück in die Wasserversorgung fließen kann. Bei einem defekten Rückflussverhinderer und einem Abfall des Eingangsdrucks öffnet ein Ablassventil und Wasser fließt nach außen ab. Mit einem Druckminderer wird der Fülldruck geregelt.

Die Anforderungen an das Wasser zum Befüllen von Heizkreisläufen steigen. Das Wasser wird daher in Wasserbehandlungseinrichtungen behandelt. Wasserbehandlungseinrichtungen sind Einrichtungen, mit denen die gelösten Inhaltsstoffe des Wassers nach Art und/oder Menge beeinflusst werden. Derartige Inhaltsstoffe sind beispielsweise gelöster Sauerstoff, gelöstes Kohlendioxid, gelöste Carbonate, Calciumionen, gelöste Salze und Anionen und Kationen und andere gelöste Moleküle und Verbindungen. Beispiele für Wasserbehandlungseinrichtungen sind insbesondere Ionentauscher und Entsalzungsanlagen mit denen die Wasserhärte aus gelöstem Calzium auf einen gewünschten Wert gesenkt wird. Dadurch wird Verkalkung vermieden. Es gibt aber auch Wasserbehandlungseinrichtungen, mit denen dem Wasser Zusätze, wie Phosphat oder andere Korrosionsschutzmittel zugesetzt werden können. Ausdrücklich ist eine Wasserbehandlungseinrichtung, wie sie hier vorgesehen ist, kein wie auch immer gearteter Filter. Ein Filter verändert lediglich die Menge von ungelöstem Material in Partikelform und hat keinen Einfluss auf die Art und Menge von gelösten Inhaltsstoffen.

Es ist vorgeschrieben, dass vor einer fest installierten Wasserbehandlungseinrichtung ein Systemtrenner installiert ist. Bekannte Systemtrenner weisen einen Druckminderer auf, mit dem der Fülldruck auf einen festen Wert begrenzt wird. Nachteilig ist es, dass der tatsächliche Fülldruck bei Verwendung einer Wasserbehandlungseinrichtung aufgrund des zusätzlichen Druckabfalls der dahinter geschalteten Wasserbehandlungseinrichtung nicht bekannt ist.

Die Heizungsarmaturen werden gewöhnlich einzeln in der Rohrleitung installiert.

### Stand der Technik

Unter der Bezeichnung "Füllkombi" vertreibt die Anmelderin Heizungsarmaturen zum Füllen von Heizkreisläufen mit einem Systemtrenner. Unter der Bezeichnung "Heizungscenter" vertreibt die Anmelderin Kombinationsarmaturen, bei denen ein Systemtrenner und ein Filter in separaten Gehäusen hintereinander angeordnet sind.

DE 20 2009 001 957 U1 offenbart eine modulare Anordnung, bei welcher Rohrtrenner, Wasserenthärtungsanordnungen, Filter und Druckminderer als Module hintereinander mit Flanschverbindungen zu einer Armaturenanordnung zusammengesetzt werden können. Jedes Modul umfasst ein eigenes Gehäuse. Der Montageaufwand ist vergleichsweise hoch. Auch DE 20 2010 008 759 U1 und DE 20 2012 106 957 A1 als nächstliegender Stand der Technik offenbaren eine Anordnung mit Wasserenthärtungsanordnungen und Druckminderer, bei denen der Druckminderer vor der Wasserenthärtungsanordnung montiert ist.
Aus der nicht vor dem Prioritätstag dieser Anmeldung veröffentlichten deutschen Patentanmeldung DE 10 2013 102 460.2 der Anmelderin ist ein Heizungsvollautomat mit einem von einem Motor angetriebenen Absperrhahn, einem Filter, einer Systemtrenneranordnung, einem Druckminderer und einem Drucksensor bekannt. In der Armatur ist ein Steuergerät vorgesehen, welches mit den Signalen des Drucksensors beaufschlagt ist und den Absperrhahn bei einem Druckabfall öffnet. Es ist ferner ein Ionentauscher oder andere Einrichtung zur Wasserbehandlung mit Anschlüssen an das gemeinsame Gehäuse vorgesehen. Der Automat besteht aus mehreren Modulen die über eine Flanschverbindung miteinander verbunden werden. Die Module erstrecken sich über verschiedene Ebenen. Die Gehäuse sind entsprechend aufwändig herzustellende Gußteile mit unterschiedlichen Hinterschnitten, die hohe Herstellungskosten verursachen.

### Offenbarung der Erfindung

Es ist Aufgabe der Erfindung, eine Armaturenanordnung zum Füllen und Nachfüllen von Heizkreisläufen mit Wasser der eingangs genannten Art zu schaffen, die besonders einfach zu montieren ist, wenig Material und Platz verbraucht und besonders kostengünstig herstellbar ist.
Erfindungsgemäß wird die Aufgabe dadurch gelöst, dass
(f) der Druckminderer innerhalb des Armaturengehäuses im Strömungsweg hinter der Wasserbehandlungseinrichtung und vor dem auslassseitigen Absperrhahn angeordnet ist; und
(g) das Armaturengehäuse derart ausgebildet ist, dass die Strömung durch alle Komponenten in einer Ebene verläuft.

Erfindungsgemäß ist vorgesehen, dass die Systemtrenneranordnung und der Druckminderer in die Wasserbehandlungseinrichtung integriert wird. Sowohl die Systemtrenneranordnung als auch der Druckminderer sitzen im gleichen Gehäuse. Es ist also nur noch eine Armatur statt bisher zwei Armaturen zu installieren. Anders als bei bekannten Anordnungen werden nur zwei Absperrhähne für alle Komponenten verwendet. Alle Komponenten sind zwischen diesen Absperrhähnen angeordnet und können leicht ausgetauscht oder gewartet werden. Ein wesentlicher Aspekt der Erfindung ist es, dass der Druckminderer im Strömungsweg hinter der Wasserbehandlungseinrichtung angeordnet ist. Dadurch wird der tatsächliche Fülldruck eingestellt. Der Druckabfall in der Wasserbehandlungseinrichtung erfolgt bereits stromaufwärts. Die Reihenfolge Systemtrenner - Wasserbehandlungseinrichtung - Druckminderer ist erst möglich, wenn alle Komponenten in einem Gehäuse vereint sind. Bekannte Anordnungen verwenden zwar eine Kombination aus Systemtrenner und Druckminderer, müssen diese aber beide stromaufwärts zur Wasserbehandlungseinrichtung anordnen. Die erfindungsgemäße Anordnung ist trotz der großen Anzahl an Komponenten besonders kompakt, weil die Strömung durch alle Komponenten in einer Ebene verläuft. Dadurch kann eine vergleichsweise hohe Anzahl an Funktionalitäten sehr kostengünstig verwirklicht werden. Das Armaturengehäuse ist als kostengünstiges Press- oder Schmiedeteil ohne komplizierte Hinterschnitte herstellbar.

Vorteilhafterweise ist die Wasserbehandlungseinrichtung ein Ionentauscher und/oder eine Einrichtung zum Versetzen mit Zusätzen zur Wasserbehandlung. Dabei ist insbesondere vorteilhaft, wenn eine Verschneideeinrichtung in dem Armaturengehäuse vorgesehen ist, mit welcher dem durch die Wasserbehandlungseinrichtung geleiteten Wasser unbehandeltes Wasser beigemischt wird. Die Verschneideeinrichtung kann einstellbar sein. Dann kann die Menge der Zusätze bzw. der Härtegrad auf einen gewünschten Wert eingestellt werden.

Bei einer weiteren Ausgestaltung der Erfindung ist eine Turbine oder anderes strömungsmessendes Mittel vorgesehen, deren Signale an eine Auswerteelektronik übertragen werden. Mit dem strömungsmessenden Mittel wird die Durchflussmenge durch die Wasserbehandlungseinrichtung erfasst. Wenn die Wasserbehandlungseinrichtung Verbrauchsmaterialien aufweist und bei einer bestimmten Wassermenge erschöpft oder ganz oder teilweise verbraucht ist, wird dies erfasst und kann von der Auswerteelektronik angezeigt werden. Dann kann die Wasserbehandlungseinrichtung ausgetauscht, nachgefüllt oder regeneriert werden.

Eine besonders kompakte und kostengünstige Anordnung wird erreicht, wenn das Gehäuse eine quer zur Rohrleitungsachse verlaufende, senkrechte Bohrung mit einer verschließbaren Öffnung in axialer Richtung aufweist, in welcher die Systemtrenneranordnung koaxial angeordnet ist. Die Systemtrenneranordnung ist durch die Öffnung gut zugänglich. Eine Systemtrenneranordnung kann beispielsweise Patronenform haben und als Ganzes durch die Öffnung - beispielsweise von oben - in die Bohrung eingesteckt werden.
Vorzugsweise ist auch der Druckminderer als Druckmindererpatrone ausgebildet, die in einen hierfür vorgesehenen Stutzen des Armaturengehäuses eingesetzt ist, der sich parallel zur Rohrleitungsachse erstreckt und durch den die von der Wasserbehandlungseinrichtung zum auslassseitigen Absperrhahn fließende Strömung fließt. Mit der Druckmindererpatrone hinter der Wasserbehandlungseinrichtung wird der tatsächliche Fülldruck geregelt. Die Patrone lässt sich leicht seitlich in den Stutzen einstecken und herausziehen. Von dort ist der Druckminderer auch gut einstellbar.

Vorzugsweise umfasst die Verschneideeinrichtung einen Kolben in einem Stutzen, der sich parallel zur Rohrachse in der Strömung zwischen der Wasserbehandlungseinrichtung und dem Druckminderer erstreckt. Dann kann auch die Verschneideeinrichtung leicht von der Seite her auf einen gewünschten Wert eingestellt werden.

Ausgestaltungen der Erfindung sind Gegenstand der Unteransprüche. Ein Ausführungsbeispiel ist nachstehend unter Bezugnahme auf die beigefügten Zeichnungen näher erläutert.

### Kurze Beschreibung der Zeichnungen

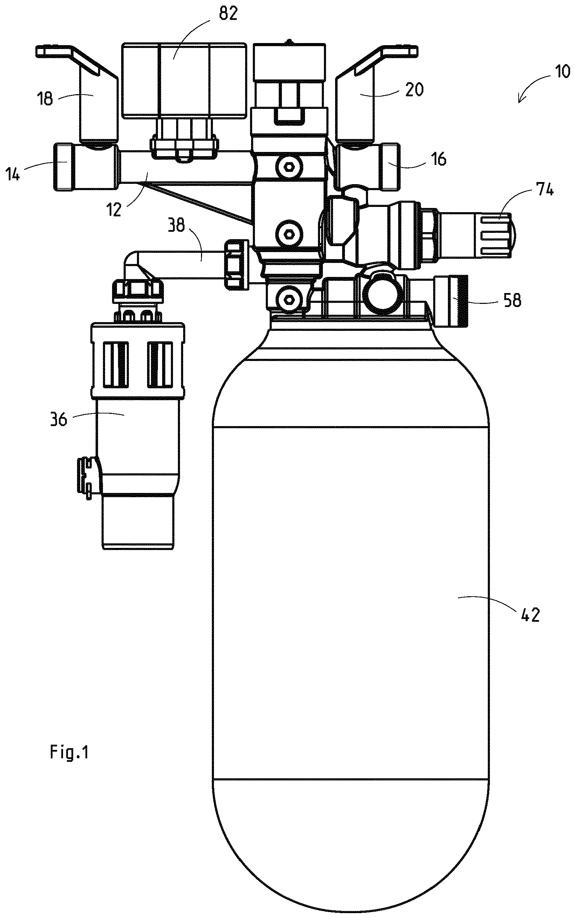

- Fig.1: ist eine Seitenansicht einer Armaturenanordnung zur Wasserbehandlung von Wasser für Heizkreisläufe mit integriertem Systemtrenner und Druckminderer.
- Fig.2: ist ein Längsschnitt durch die Anordnung aus Figur 1.
- Fig.3: ist ein vergrößerter Ausschnitt aus Figur 2.
- Fig.4: zeigt einen Querschnittsausschnitt entlang der Schnittachse B-B in Figur 3.
- Fig.5: ist ein vergrößerter Ausschnitt aus Figur 4.

### Beschreibung des Ausführungsbeispiels

Die Figuren zeigen eine allgemein mit 10 bezeichnete Armaturenanordnung zur Wasserbehandlung von Wasser für Heizkreisläufe. Die Armaturenanordnung 10 weist ein Armaturengehäuse 12 mit einem Einlass 14 und einem Auslass 16 auf. Unmittelbar hinter dem Einlass 14 ist ein handbetätigter Kugelhahn 18 angeordnet. Mit dem Kugelhahn 18 lässt sich die gesamte Wasserzufuhr absperren. Unmittelbar vor dem Auslass 16 ist ein weiterer, handbetätigter Kugelhahn 20 angeordnet. Wenn beide Kugelhähne geschlossen sind, kann die Armatur und ihre Komponenten leicht ausgetauscht und gewartet werden.

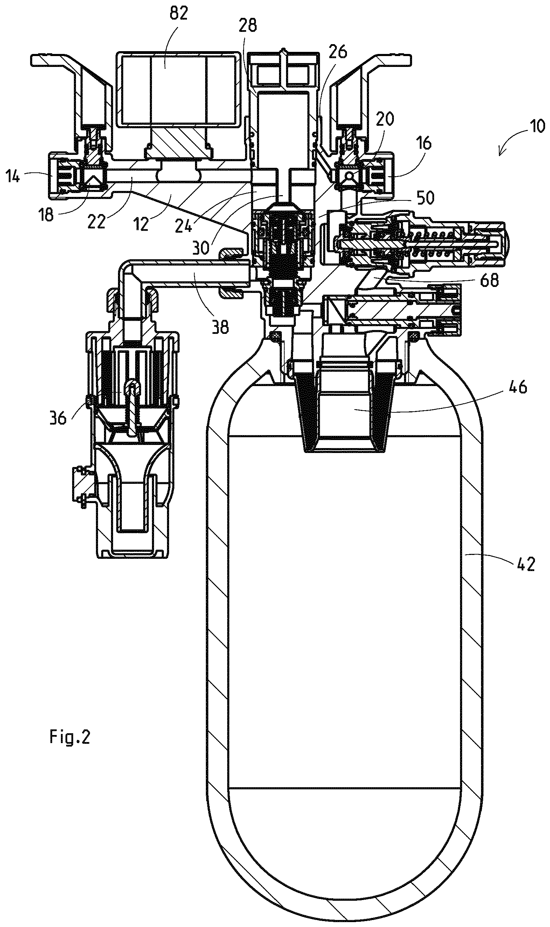

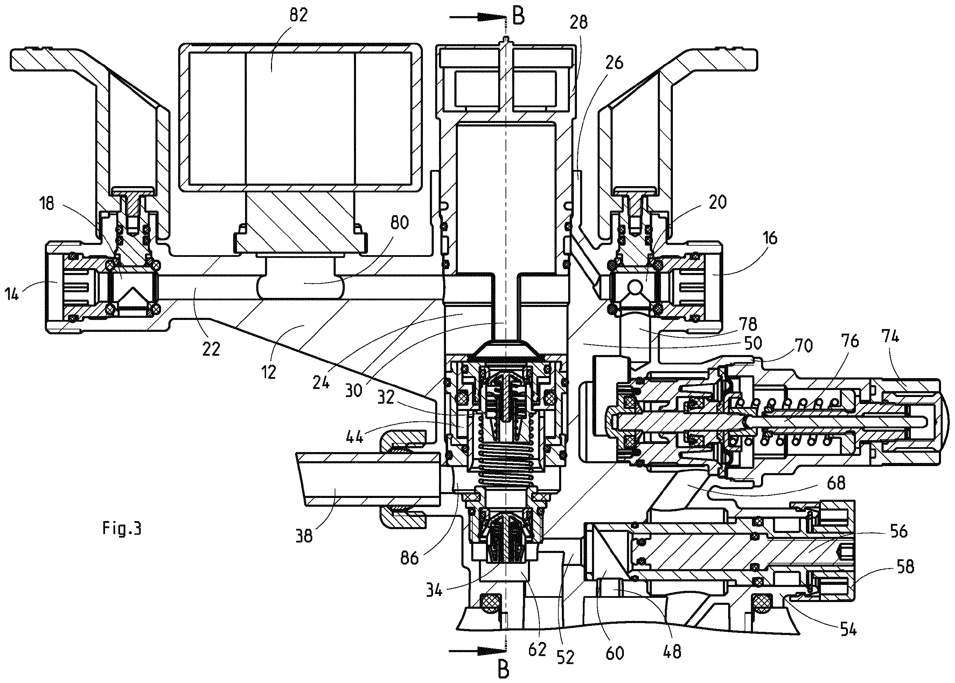

Die Armaturenanordnung 10 wird in einer (nicht dargestellten) Rohrleitung zum Befüllen eines Heizkreislaufs installiert. Der Einlass 14 und der Auslass 16 sind daher als Stutzen ausgebildet. Das Armaturengehäuse 12 ist einteilig ausgebildet. Es weist eine erste Gehäusebohrung 22 parallel zur horizontalen Rohrachse, Einlassstutzen 14 und Auslassstutzen 16 auf. Die erste Bohrung 22 ist nicht durchgängig und mündet in einer senkrecht zu dieser ersten Bohrung 22 verlaufenden zweiten Gehäusebohrung 24. Dies ist in Figur 2 und 3 zu erkennen. Die zweite Bohrung 24 fluchtet am oberen Ende mit einem Gehäusestutzen 26. Der Gehäusestutzen 26 ist mit einem Stopfen 28 verschlossen. Am unteren Ende des Stopfens 28 sind strahlenförmig verlaufende Rippen 30 angeformt.

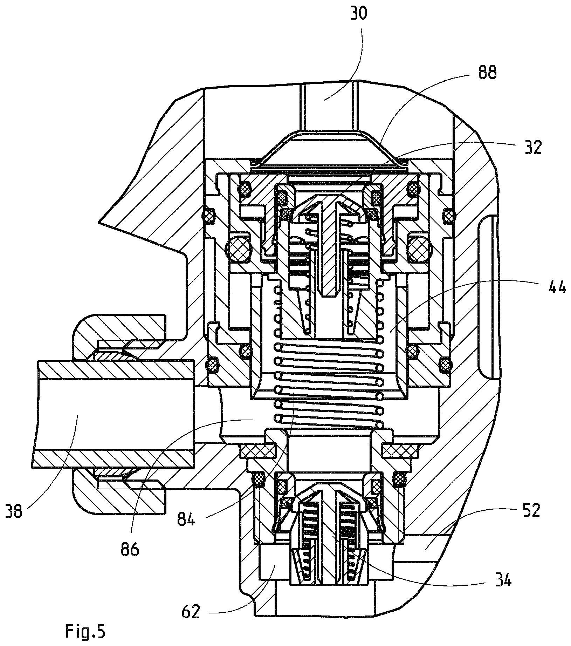

In der senkrechten, zweiten Gehäusebohrung 24 sitzt ein Systemtrenner 84. Der Systemtrenner ist in Figur 5 noch einmal im Detail dargestellt. Der Systemtrenner weist einen stromaufwärtigen, oberen Rückflussverhinderer 32 und einen stromabwärtigen, unteren Rückflussverhinderer 34 auf. Diese sind in Figur 3 und 5 gut zu erkennen. Zwischen den Rückflussverhinderern 32 und 34 ist ein Mitteldruckraum 44 gebildet, der über ein seitlich angeordnetes Ablassventil 86 und eine horizontale Rohrverbindung 38 mit einer Ablaufanordnung 36 verbunden ist. Die Komponenten und Funktionsweise eines Systemtrenners 84 sind dem Fachmann allgemein bekannt und brauchen daher hier nicht näher erläutert werden. Mit dem Systemtrenner 84 wird sichergestellt, dass unabhängig von Eingangs- und Ausgangsdruck kein Wasser aus dem Bereich 62 stromabwärts des stromabwärtigen Rückflussverhinderers 34 zurück in den Einlassbereich und somit in die Wasserversorgung fließen kann, selbst wenn einer der Rückflussverhinderer 32 oder 34 undicht ist. Zurückfließendes Wasser wird über die Ablaufanordnung 36 ins Abwasser abgeleitet. Der als Systemtrennerpatrone ausgebildete Systemtrenner 84 wird mit den Rippen 30 in ihrer Lage in der Bohrung 24 gehalten. Vor dem Systemtrenner 84 ist ein Sieb 88 angeordnet. Das Sieb 88 ist gekrümmt. Dadurch hat es eine größere Oberfläche mit geringerem Druckverlust.

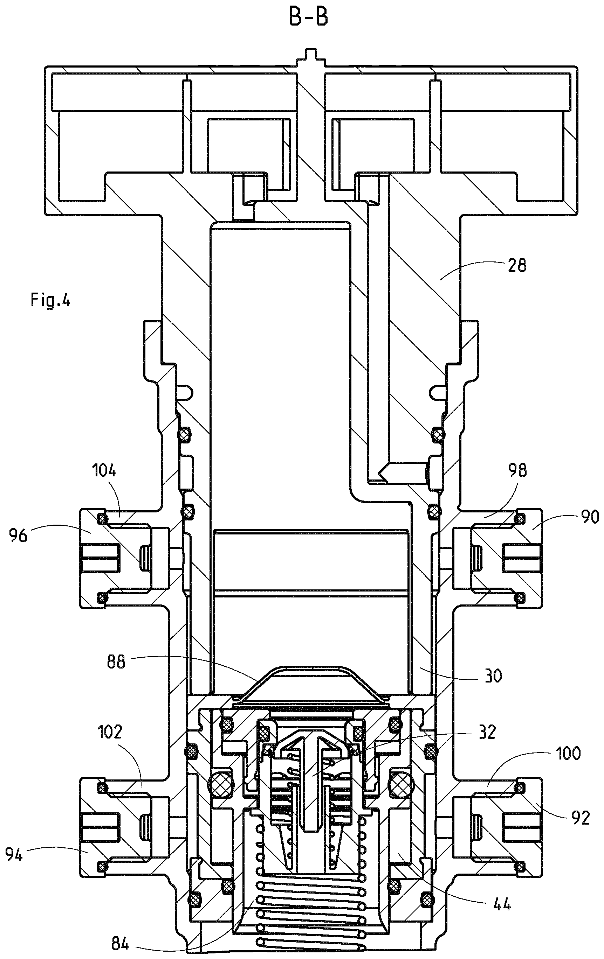

Figur 4 zeigt einen Schnitt durch den Systemtrenner 84 entlang der Schnittebene B-B. Dort sind die mit Stopfen 90, 92, 94 und 96 verschlossenen Prüfanschlüsse 98, 100, 102 und 104 zu erkennen. Jeweils gegenüberliegende Prüfanschlüsse 98 und 104 ermöglichen die Messung des Eingangsdrucks. Dabei kann der geeignete Prüfanschluss 98 oder 104 ausgewählt werden, je nachdem, wie die Armatur in der Rohrleitung eingebaut wird (Rechts- Links-Einbau). Gegenüberliegende Prüfanschlüsse 100 und 102 ermöglichen in ähnlicher Weise die Messung des Mitteldrucks in der Mitteldruckkammer 44.

Stromabwärts und unterhalb des Systemtrenners bildet das Gehäuse 12 einen breiten Stutzen 40 mit einem Außengewinde. Dies ist in Figur 2 zu erkennen. An dem Stutzen 40 wird eine Flasche oder Kartusche 42 handelsüblicher Bauart angeschraubt. Die Flasche oder Kartusche 42 ist mit geeignetem Material zur Wasserbehandlung, etwa Ionentauschermaterial und/oder Phosphat-Zusätzen gefüllt. Das Wasser wird außen in die Flasche oder Kartusche 42 geleitet und fließt innen wieder nach oben heraus.

Der Auslass 46 der Flasche oder Kartusche ist mit einem nach oben verlaufenden Kanal 48 im Gehäuse 12 verbunden. Der Kanal 48 ist durch eine Gehäusewandung 50 von der Bohrung 24 getrennt. Quer zum Kanal 48 bildet das Gehäuse 12 einen horizontal verlaufenden Stutzen 54. In dem Stutzen 54 ist ein Kolben 56 verschieblich geführt. Die Lage des Kolbens 56 ist mit einer Stellschraube 58 einstellbar. Der Bereich 60 vor dem Kolben 56 ist über den Kanal 48 mit dem Auslass 46 der Flasche oder Kartusche 42 verbunden. Der Bereich 60 ist weiterhin über einen Kanal 52 mit dem Bereich 62 hinter dem Systemtrenner verbunden. Über den Kanal 52 kann auf diese Weise dem behandelten Wasser unbehandeltes Wasser beigemischt werden. Mit der Lage des Kolbens 56 wird der Strömungsquerschnitt des Kanals 48 eingestellt, so dass ein gewünschtes Mischungsverhältnis erreicht wird. Hinter der so gebildeten Verschneideeinrichtung mündet der Kanal 48 in einem Kanal 68, der ebenfalls durch die Gehäusewandung 50 von der Bohrung 24 getrennt ist. Oberhalb des Kanals 68 bildet das Gehäuse 12 einen weiteren Stutzen 70 mit horizontaler Längsachse. In den Stutzen 70 ist eine Druckmindererpatrone 72 üblicher Bauart eingesteckt. Derartige Druckmindererpatronen 72 sind dem Fachmann wohl bekannt und brauchen daher hier nicht näher erläutert werden. Mit einer Stellschraube 74 kann der Auslassdruck hinter dem Druckmindererventil 76 eingestellt werden. Das Befüllen der Heizung erfolgt also mit wohl definiertem Druck. Vom Druckminderer 72 fließt das Wasser durch einen weiteren Kanal 78 zum Absperrhahn 20. Der Absperrhahn ist als handelsüblicher Kugelhahn ausgebildet und kann wie der eingangsseitige Absperrhahn 18 manuell betätigt werden. Hinter dem Absperrhahn 20 fließt das Wasser durch den Auslass 16 und eine Rohrleitung in den Heizkreislauf. Das Wasser hat einen am Druckminderer 72 eingestellten Druck und eine an der Verschneideeinrichtung mit Kolben 56 eingestellte Härte.

Unmittelbar hinter dem eingangsseitigen Absperrhahn 18 ist eine Turbine 80 angeordnet. Mit der Turbine 80 wird das Durchflussvolumen durch die Armatur 10 erfasst. Das Signal der Turbine 80 wird an eine Auswerteelektronik übertragen. Dort wird aus dem Härtegrad des unbehandelten Wassers und der Durchflussmenge der Verbrauchszustand der Wasserbehandlungseinrichtung ermittelt. Wenn die Wasserbehandlungseinrichtung verbraucht ist, wird ein entsprechendes Signal erzeugt und angezeigt.

Die beschriebene Anordnung weist ein Gehäuse 12 aus einem geeigneten, druckfesten Metall, beispielsweise Messing auf. Man erkennt, dass die Strömung durch alle Komponenten, d.h. Absperrhähne 18, 20 Systemtrennerpatrone, Verschneideventil und Druckmindererpatrone in einer Ebene liegt. Dadurch wird die Herstellung besonders kostengünstig.

Das vorstehende Ausführungsbeispiel wurde sehr konkret beschrieben. Es versteht sich aber, dass der Erfindungsgedanke nicht auf das Ausführungsbeispiel beschränkt ist und sich dem Fachmann vielfache Variationen ergeben, die ebenfalls vom Erfindungsgedanken umfasst sind, der ausschließlich durch die Ansprüche beschränkt ist.

## Patentansprüche

1. Armaturenanordnung (10) zur Wasserbehandlung von Wasser für Heizkreisläufe, enthaltend
(a) ein in eine zu dem Heizkreislauf führende Rohrleitung einbaubares, strömungsführendes, gemeinsames Armaturengehäuse (12) mit einem Einlass (14) und einem Auslass (16);
(b) jeweils einen, an dem Armaturengehäuse vorgesehenen, einlassseitigen und einen auslassseitigen Absperrhahn (16, 20);
(c) eine im Strömungsweg zwischen dem einlassseitigen und dem auslassseitigen Absperrhahn angeordnete Wasserbehandlungseinrichtung (42);
(d) eine Systemtrenneranordnung (84) mit einem stromaufwärtigen und einem stromabwärtigen Rückflussverhinderer (32, 34) und einer Ablaufanordnung (36), die innerhalb des Armaturengehäuses (12) im Strömungsweg hinter dem einlassseitigen Absperrhahn (18) und vor der Wasserbehandlungseinrichtung (42) angeordnet ist; und
(e) einen Druckminderer (72); wobei
(f) der Druckminderer (72) innerhalb des Armaturengehäuses (12) im Strömungsweg hinter der Wasserbehandlungseinrichtung (42) und vor dem auslassseitigen Absperrhahn (20) angeordnet ist; und
(g) das Armaturengehäuse (12) derart ausgebildet ist, dass die Strömung durch alle Komponenten (18, 84, 42, 74, 20) in einer Ebene verläuft.

2. Armaturenanordnung (10) nach Anspruch 1, **dadurch gekennzeichnet, dass** die Wasserbehandlungseinrichtung (42) ein Ionentauscher und/oder eine Einrichtung zum Versetzen mit Zusätzen zur Wasserbehandlung ist.

3. Armaturenanordnung nach Anspruch 1 oder 2, **dadurch gekennzeichnet, dass** eine Verschneideeinrichtung (56) in dem Armaturengehäuse (12) vorgesehen ist, mit welcher dem durch die Wasserbehandlungseinrichtung (42) geleiteten Wasser unbehandeltes Wasser beigemischt wird.

4. Armaturenanordnung nach einem der vorgehenden Ansprüche, **gekennzeichnet durch** eine Turbine (80) oder andere strömungsmessende Mittel, deren Signale an eine Auswerteelektronik (82) übertragen werden.

5. Armaturenanordnung nach einem der vorgehenden Ansprüche, **dadurch gekennzeichnet, dass** das Gehäuse (12) eine quer zur Rohrleitungsachse verlaufende, senkrechte Bohrung (24) mit einer verschließbaren Öffnung (26) in axialer Richtung aufweist, in welcher die Systemtrenneranordnung (84) koaxial angeordnet ist.

6. Armaturenanordnung (10) nach einem der vorgehenden Ansprüche, **dadurch gekennzeichnet, dass** der Druckminderer als Druckmindererpatrone (72) ausgebildet ist, die in einen hierfür vorgesehenen Stutzen (70) des Armaturengehäuses (12) eingesetzt ist, der sich parallel zur Rohrleitungsachse erstreckt und durch den die von der Wasserbehandlungseinrichtung (42) zum auslassseitigen Absperrhahn (20) fließende Strömung fließt.

7. Armaturenanordnung (10) nach einem der vorgehenden Ansprüche 3 bis 6, **dadurch gekennzeichnet, dass** die Verschneideeinrichtung einen Kolben (56) in einem Stutzen (54) umfasst, der sich parallel zur Rohrachse in der Strömung zwischen der Wasserbehandlungseinrichtung (42) und dem Druckminderer (72) erstreckt.

## Claims

1. Fitting assembly (10) for water treatment of water for heating circuits, comprising
(a) a flow guiding, common fitting housing (12) with an inlet (14) and an outlet (16), the fitting housing adapted to be installed in a pipe leading to a heating circuit;
(b) a shut-off valve (16, 20) provided at the fitting housing at the inlet side and at the outlet side, respectively;
(c) a water treatment device (42) provided in the flow between the inlet side shut-off valve and the outlet side shut-off valve;
(d) a system disconnector assembly (84) with an upstream and a downstream backflow preventer (32, 34) and a drain assembly (36) provided inside the fitting housing (12) in the flow downstream of the inlet side shut-off valve (18) and upstream of the water treatment device (42); and
(e) a pressure reducer (72);wherein
(f) the pressure reducer (72) is provided inside the fitting housing (12) in the flow downstream of the water treatment device (42) and upstream of the outlet side shut-off valve (20); and
(g) the fitting housing (12) is designed in such a way that the flow through all components (18, 84, 42, 74, 20) flows in one plane.

2. Fitting assembly (10) according to claim 1, **characterized in that** the water treatment device (42) is an ion exchanger and/or a device for adding supplements for the purpose of water treatment.

3. Fitting assembly (10) according to claim 1 or 2, **characterized in that** a water blending device (56) is provided in the fitting housing (12) adapted to add untreated water to the water which has flown through the water treatment device (42).

4. Fitting assembly (10) according to any of the preceding claims, **characterized by** a turbine (80) or any other flow measuring means generating signals which are transmitted to a processing unit (82).

5. Fitting assembly (10) according to any of the preceding claims, **characterized in that** the housing (12) has a vertical bore hole (24) laterally extending to the pipe axis with a closable opening (26) in an axial direction adapted to accommodate the system disconnector assembly (84).

6. Fitting assembly (10) according to any of the preceding claims, **characterized in that** the pressure reducer is provided in the form of a pressure reducer cartridge (72) inserted into a socket provided in the fitting housing (12) for this purpose, which extends parallel to the pipe axis and where the flow coming from the water treatment device (42) flows through towards the outlet side shut-off valve (20).

7. Fitting assembly (10) according to any of claims 3 to 6, **characterized in that,** the blending device comprises a piston (56) in a socket, extending parallel to the pipe axis in the flow between the water treatment device (42) and the pressure reducer (72).

## Revendications

1. Disposition de robinetterie (10) destinée à traiter l'eau pour circuits de chauffage, comprenant
(a) un boîtier de robinetterie (12) commun, guidant le flux et susceptible d'être monté à l'intérieur d'une conduite de tuyau conduisant au circuit de chauffage, qui est muni d'une entrée (14) et d'une sortie (16) ;
(b) respectivement un robinet d'arrêt (16, 20) situé côté entrée, prévu sur le boîtier de robinetterie, et un situé côté sortie ;
(c) un dispositif de traitement d'eau (42) disposé dans le chemin de flux entre le robinet d'arrêt situé côté entrée et le robinet d'arrêt situé côté sortie ;
(d) une disposition de disconnecteur (84) munie d'un clapet antiretour (32, 34) amont et aval et d'une disposition d'évacuation (36) disposée à l'intérieur du boîtier de robinetterie (12) dans le chemin de flux derrière le robinet d'arrêt situé côté entrée (18) et avant la disposition de traitement d'eau (42) ; et
(e) un réducteur de pression (72) ;
(f) le réducteur de pression (72) étant disposé à l'intérieur du boîtier de robinetterie (12) dans le chemin de flux derrière le dispositif de traitement d'eau (42) et avant le robinet d'arrêt situé côté sortie (20) ; et
(g) le boîtier de robinetterie (12) étant configuré de sorte que le flux traverse tous les composants (18, 84, 42, 74, 20) sur un même plan.

2. Disposition de robinetterie (10) selon la revendication 1, **caractérisée en ce que** le dispositif de traitement d'eau (42) est un échangeur d'ions et/ou un dispositif destiné à rajouter des additifs pour le traitement d'eau.

3. Disposition de robinetterie selon la revendication 1 ou 2, **caractérisée en ce qu'**il est prévu dans le boîtier de robinetterie (12) un dispositif de coupage (56) permettant de mélanger de l'eau non-traitée à l'eau traversant le dispositif de traitement d'eau (42).

4. Disposition de robinetterie selon l'une quelconque des revendications précédentes, **caractérisée par** une turbine (80) ou un autre moyen de mesure du flux dont les signaux sont transmis à un dispositif d'évaluation électronique (82).

5. Disposition de robinetterie selon l'une quelconque des revendications précédentes, **caractérisée en ce que** le boîtier (12) présente, dans le sens axial, un perçage vertical (24) s'étendant diagonalement par rapport à l'axe de la conduite de tuyau et muni d'un orifice (26) susceptible de pouvoir être fermé dans lequel est disposée coaxialement la disposition de disconnecteur (84).

6. Disposition de robinetterie (10) selon l'une quelconque des revendications précédentes, **caractérisée en ce que** le réducteur de pression est configuré sous forme de réducteur de pression à cartouche (72) inséré dans un manchon (70) du boîtier de robinetterie (12) prévu à cet effet, s'étendant parallèlement à l'axe de la conduite de tuyau et traversé par le flux s'écoulant du dispositif de traitement d'eau (42) vers le robinet d'arrêt situé côté sortie (20).

7. Disposition de robinetterie (10) selon l'une quelconque des revendications précédentes 3 à 6, **caractérisée en ce que** le dispositif de coupage comprend un piston (56) dans un manchon (54) qui s'étend parallèlement à l'axe du tuyau dans le flux entre le dispositif de traitement d'eau (42) et le réducteur de pression (72).
